# EUROPEAN PATENT SPECIFICATION

(11) **EP 4 262 491 B1**
(45) Date of publication and mention of the grant of the patent: **12.03.2025**
(21) Application number: 21839677.8
(22) Date of filing: 16.12.2021
(51) Int. Cl.: H05B 3/40

(54) **AN ELECTRIC HEATER FOR A MACHINE FOR PREPARING HOT BEVERAGES**
ELEKTRISCHER HEIZKÖRPER FÜR EINE MASCHINE ZUR ZUBEREITUNG VON HEISSEN GETRÄNKEN
DISPOSITIF DE CHAUFFAGE ÉLECTRIQUE POUR MACHINE DE PRÉPARATION DE BOISSONS CHAUDES

(30) Priority: 16.12.2020 IT 202000031001
(43) Date of publication of application: 25.10.2023
(73) Proprietor: I.R.C.A. S.p.a. Industria Resistenze Corazzate e Affini, 31029 Vittorio Veneto (IT)
(72) Inventor: BORTOLUZZI, Christian, 31010 Godega di Sant'Urbano (IT); DE LUCA, Daniele, 31029 Vittorio Veneto ( TV) (IT); MICHELON, Lucio, 31020 Tarzo (IT); ZOPPAS, Federico, 31100 Treviso (IT)
(74) Representative: de Alteriis, Renato
(86) International application number: PCT/IB2021/061818
(87) International publication number: WO 2022/130264

(56) References cited:
- EP-A1- 2 572 612
- WO-A1-2016/016857

## Description

### Field of the invention

The present invention relates to an electric heater, in particular of the *flow through heater* (FTH) type, for machines for preparing hot beverages, such as, for example, coffee.

### Background art

Electric heaters are often used for heating a liquid, for example, water, which flows in a tube.

One particularly advantageous type of electric heaters is known as *"flow through heaters"* or FTH.

FTHs comprise a metal body, into which a tube and one or more electric heating elements are inserted, for example, one or more electric resistors. The liquid to be heated can flow in the tube, and the one or more electric resistors are adapted to heat the tube, and consequently, the liquid flowing therein.

FTHs are often used in machines for preparing hot beverages, such as coffee. Examples of FTHs are described in WO 2016/016857 A1 and EP 2572612 A1.

One problem of FTHs concerns calefaction. This phenomenon worsens the heating of the liquid and therefore reduces the heating efficiency and speed.

Managing to avoid the occurrence of this phenomenon is not trivial, particularly when it is desired to obtain a device capable of quickly heating the liquid and preventing undesired leaks of liquid.

Thus, the need is felt to improve FTH heaters, in particular, to avoid the occurrence of calefaction.

### Summary of the invention

It is an object of the present invention to obtain an electric heater, in particular of the FTH type, for machines for preparing hot beverages, which allows heating the liquid, in particular, water, more effectively, quickly and efficiently.

In particular, it is an object of the present invention to obtain an electric heater which allows minimizing or avoiding the occurrence of the phenomenon of calefaction of the liquid to be heated.

In this context, it is an object of the invention to obtain an electric heater which also allows minimizing or avoiding undesired leaks of liquid, particularly from the tube where the liquid to be heated flows.

Furthermore, it is a further object of the present invention to provide an electric heater which is easy to make and at a low cost.

The present invention achieves at least one of such objects, and other objects, which will be apparent in the light of the present description, by means of an electric heater for a machine, e.g. a household appliance, for preparing hot beverages, comprising
- a metal body;
- at least one electric heating element, in particular adapted to generate heat when it is crossed by an electric current, arranged in the metal body;
- a tube for the passage of a liquid to be heated, arranged in the metal body; wherein an inner surface of said tube has a surface roughness, or an arithmetical mean surface roughness Ra, which is greater than 0.8 µm, preferably greater than or equal to 1 µm, more preferably greater than 1 µm (i.e greater than 1 micrometer).

Advantageously, the surface roughness which has been selected, allows minimizing or avoiding the occurrence of the phenomenon of calefaction of the liquid to be heated, preferably water, flowing in the tube. Based on experimental tests carried out, the best results are obtained with a surface roughness greater than 1 µm.

Therefore, advantageously, an electric heater according to the invention allows a quick and efficient heating of the liquid, in particular, water.

It is particularly preferable that the tube of the electric heater is made by bending and welding a metal strip.

Indeed, advantageously, a metal strip can be used which can easily be found, for example, on the market. At least one surface of the metal strip has the surface roughness selected for the inner surface of the tube. The metal strip is bended, in particular so that said surface of the metal strip becomes the inner surface of the tube.

The welding of the metal strip causes the formation of a welding seam.

The welding seam can form a projection inside the tube.

The projection formed by the welding seam could create problems for sealing the liquid. For example, when another tube is inserted into the tube of the electric heater, and, between the two tubes, a seal ring is interposed, the latter deforms due to the projection formed by the welding seam, and consequently, there may be undesired leaks of liquid.

Therefore, it is particularly preferable that, at the two end stretches of the tube, the welding seam is subjected to a crushing, preferably so that the welding seam does not form a projection inside the tube.

Advantageously, in this way, when a tube is inserted into an end stretch of the tube of the electric heater, and a seal ring is interposed between the tubes, it is possible to avoid undesired deformations of the seal ring, consequently, ensuring the hermetic seal of the liquid.

Advantageously, the electric heater can be particularly compact.

The invention also relates to a method, according to claim 10, wherein there is provided a step of:
a) bending a metal strip having at least one surface having a surface roughness which is greater than 0.8 µm, preferably greater than or equal to 1 µm, preferably greater than 1 µm, and executing a welding of said metal strip, so as to form a tube having a welding seam.

The invention also relates to a machine, e.g. a household appliance, for preparing hot beverages, according to claim 12.

Further features and advantages of the invention will be more apparent in the light of the detailed description of non-exclusive exemplary embodiments.

The dependent claims describe particular embodiments of the invention.

### Brief description of the figures

In the description of the invention, reference is made to the accompanying drawings, which are provided by way of non-limiting example, in which:
Fig. 1 shows a perspective view of an example of an electric heater according to the invention;
Fig. 2 diagrammatically shows part of a tube of an electric heater according to the invention, before carrying out an optional processing; in Fig. 2, for illustrative purposes, part of the wall of the tube is not drawn on the right side;
Fig. 3 diagrammatically shows the part of the tube in Fig. 2, after carrying out the aforesaid optional processing.

The same elements or components have the same reference numerals.

### Description of exemplary embodiments of the invention

With reference to the Figures, exemplary embodiments of an electric heater 1 according to the invention are described.

The electric heater 1 is designed, in particular, for a machine, e.g. a household appliance, for preparing hot beverages, such as, for example, coffee.

The electric heater 1 comprises:
- a metal body 2;
- at least one (i.e. one or more) electric heating element 3, 4, in particular, adapted to generate heat when it is crossed by an electric current, arranged in the metal body 2;
- a tube 5 for the passage of a liquid to be heated, arranged in the metal body 2; wherein an inner surface 6 of said tube 5 has a surface roughness Ra, which is greater than 0.8 µm (i.e. Ra > 0.8 µm).

Preferably, the surface roughness Ra is greater than, or equal to, 1 µm. In particular, the surface roughness Ra is preferably greater than 1 µm (Ra > 1 µm). Experimental tests have highlighted that a surface roughness Ra which is greater than 1 µm allows better minimizing the occurrence of calefaction.

Purely by way of a non-limiting example, the surface roughness Ra can be greater than, or equal to 1.5 µm.

Purely by way of example, in all embodiments, the surface roughness Ra can be up to 10 µm or up to 5 µm. For example, 1 µm < Ra < 10 µm; or for example 1 µm < Ra ≤ 5 µm.

Said surface roughness values Ra are, in particular, arithmetical mean roughness values, in particular, according to the ISO 4287 standard, more specifically ISO 4287:1997.

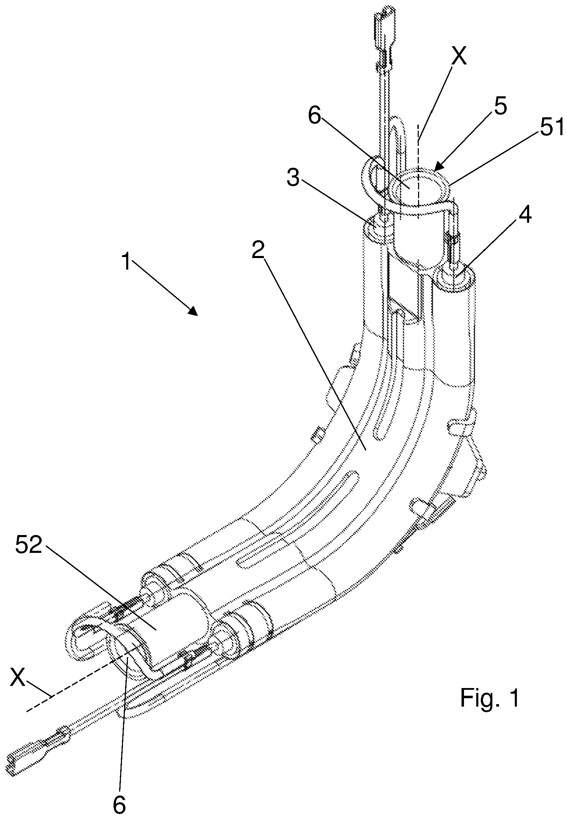

The wall of the tube 5, in particular the inner surface 6 of the tube 5, extends about an axis X. The axis X can be rectilinear or curvilinear or it can comprise one or more rectilinear stretches and one or more curvilinear stretches. For example, the axis X can comprise a curvilinear stretch extending between two rectilinear stretches (as shown in Fig. 1). In particular, the axis X is a longitudinal axis.

The tube 5 can, for example, have a circular, or substantially circular section.

The tube 5, in particular, is made of metal, preferably steel, preferably stainless steel.

Preferably, the tube 5 is made by welding a metal strip, in particular, by bending and welding a metal strip.

Purely by way of a non-limiting example, said metal strip can be of the Ugitop^{®}, or Uginox^{®} Top type, in particular, with surface finishing of the Ugitop^{®}, or Uginox^{®} Top type.

The tube 5 made by welding the metal strip has a welding seam 7, or a welding area. Preferably, the welding seam 7 extends along the whole length of the tube 5. In particular, the welding seam 7 extends substantially parallel to the axis X about which the wall of the tube 5 extends.

The welding seam 7 forms part of the wall of the tube 5.

The inner surface of the tube 5 defined by the welding seam 7, and preferably, only such portion of inner surface can optionally have a surface roughness, which is different to the remaining part of the inner surface of the tube 5.

In other words, preferably, the whole inner surface 6 of the tube 5 has the aforesaid surface roughness Ra, optionally, except for the inner surface defined by the welding seam 7.

The tube 5 is provided with two end stretches 51, 52. Preferably, each end stretch 51, 52 is rectilinear. Each end stretch 51, 52 delimits a respective opening in the tube 5. Preferably, the tube 5 is only provided with such two openings.

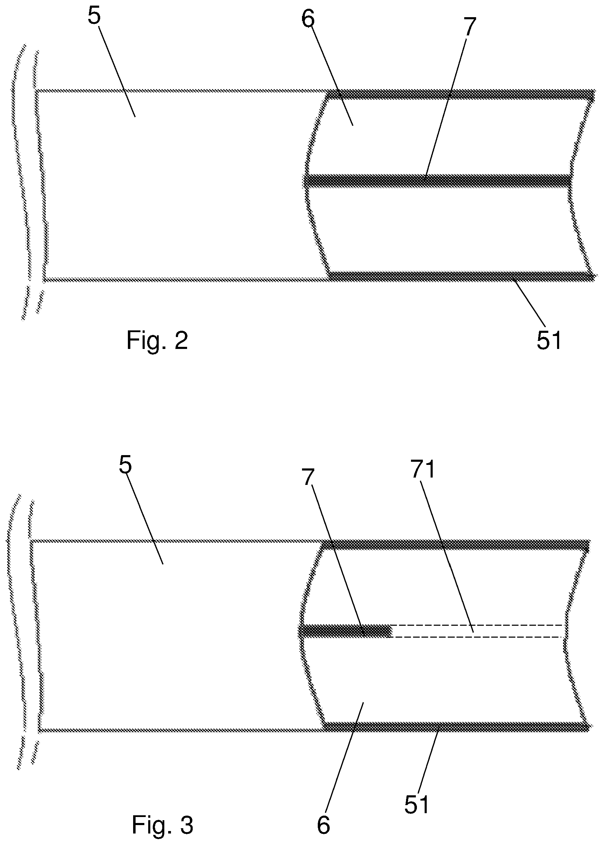

Preferably, at each end stretch 51, 52 of the tube 5, the welding seam 7 has been subjected to a crushing or a chip removal process, as shown diagrammatically, for example, in Fig. 3. In particular, preferably, at each end stretch 51, 52 of the tube 5, the welding seam 7 does not form a projection inside the tube 5.

In particular, at each end stretch 51, 52 of the tube 5, the welding seam 7 does not substantially form a projection inside the tube 5 with respect to the remaining inner surface 6 part of the tube 5.

In other words, the welding seam 7 comprises two portions 71 (one of which is shown diagrammatically in Fig. 3), each of which has a height, in particular, towards the inside of the tube 5, which is lower than the height, towards the inside of the tube 5, of the remaining part of the welding seam 7. In particular, said height is measured parallel to an axis, which is orthogonal, e.g. radial, to the axis X.

Crushing is preferred to chip removal processing, in particular, because it can be carried out more cost-effectively.

Purely by way of a non-limiting example, the welding seam 7, except for portions 71, can have a height up to 0.3 mm.

Each of the two portions 71 has been crushed or subjected to chip removal processing, preferably so that it does not form a projection inside the tube 5. For example, each portion 71 of the welding seam 7 is substantially flush with the remaining part of the inner surface 6 of the tube 5. For example, each portion 71 has a height towards the inside of the tube 5, parallel to an axis perpendicular to the axis X, which is equal, or approximately equal to 0. Each of the two portions 71 is at a respective end stretch 51, 52 of the tube 5.

Preferably, the welding seam 7 is crushed (or processed by chip removal) only at the two end stretches of the tube 51, 52. Indeed, a seal ring can be arranged at the end stretches 51, 52, which can suitably come into contact with the inner surface 6. Not being necessary, it is preferred not to crush (or process by chip removal) the welding seam 7 in further zones, so as to simplify the production process.

Preferably, each end stretch 51, 52 of the tube 5 has a length from 3 to 40 mm, preferably from 15 to 25 mm. In particular, said length is measured parallel to the axis X. Each of the two portions 71 of the welding seam preferably has a length from 3 to 40 mm, preferably from 15 to 25 mm.

Preferably, the end stretches 51, 52 are outside the metal body 2, or in other words exit from the metal body 2.

Preferably, each end stretch 51, 52 is provided with a flange extending from the wall of the tube 5.

Preferably, the tube 5 has an outer diameter from 8 to 16 mm, e.g. equal to, or approximately equal to 12.7 mm.

Preferably, the wall thickness of the tube 5 is from 0.3 to 0.8 mm.

Purely by way of example, the welding seam 7 can have a width of 0.5 a 3 mm, said width being measured, in particular, perpendicularly to the axis X, along the wall of the tube 5.

In all embodiments, the electric heater 1 is configured, in particular, so that the one or more electric heating elements 3, 4 can transmit heat to the tube 5 through the metal body 2.

The tube 5 and the one or more electric heating elements 3, 4 are incorporated into the metal body 2, preferably, they are partially incorporated.

The one or more electric heating elements 3, 4 are preferably brazed with the metal body 2.

In particular, the one or more electric heating elements 3, 4, are in contact with the metal body 2.

The one or more electric heating elements 3, 4 are different from the metal body 2. The tube 5 is preferably brazed with the metal body 2. In particular, the tube 5 is in contact with the metal body 2. In particular, the outer surface of the tube 5 is in contact with the metal body 2, preferably directly in contact with the metal body 2. The tube 5 is a distinct element to the metal body 2. In particular, an interface is present between the outer surface of the tube 5 and the metal body 2.

The one or more electric heating elements 3, 4 are adapted to be connected to a source of electricity and they are adapted to generate heat when they are crossed by an electric current, i.e. they can generate heat by the *Joule* effect.

In particular, each electric heating element 3, 4 is an electric resistor, preferably an sheathed resistor.

In particular, preferably, each electric heating element 3, 4 comprises at least one resistive element arranged inside a metal casing or armor, e.g. made of iron or steel or aluminum. The armor is in contact, preferably directly in contact, with the metal body 2.

Preferably, two end portions of each electric heating 3, 4 are outside the metal body 2, or in other words exit from the metal body 2.

The metal body 2 is preferably made of aluminum or aluminum alloy. The metal body 2 is preferably made by means of die-casting.

Preferably, the one or more electric heating elements 3, 4 extend parallel to the tube 5. In particular, the longitudinal axis of each electric heating element 3, 4 preferably extends parallel to the axis X of the tube 5.

Optionally, the electric heater 1 also comprises a first conduit and a second conduit (not shown), each inserted into a respective end stretch 51, 52 of the tube 5. At least one first seal ring (not shown) is arranged between the first conduit and the end stretch 51, and at least one second seal ring (not shown) is arranged between the second conduit and the end stretch 52.

As will be described below, said conduits and seal rings can be parts of a machine for preparing hot beverages.

The first conduit is, for example, a tube preferably made of metal, for example, of steel.

The second conduit is, for example, a tube preferably made of metal, for example, steel.

Preferably, each seal ring is elastomeric. Preferably, each seal ring is an o-ring.

In the non-limiting example shown in Fig. 1, the electric heater 1 comprises two electric heating elements 3, 4. The electric heating elements 3, 4 are preferably placed next to the tube 5. In particular, the tube 5 is preferably arranged between the two electric heating elements 3, 4.

The tube 5, for example, comprises two rectilinear end stretches 51, 52 between which a curved stretch extends. Therefore, the axis X comprises two rectilinear stretches between which a curvilinear stretch extends. Preferably, purely by way of example, the two end stretches 51, 52 form an angle of about 90° between each other.

As said previously, the tube 5 can also have other shapes with respect to the one shown in Fig. 1, for example, it can be straight, in particular, completely straight, therefore, the axis X is rectilinear.

A particularly preferred example of a process for obtaining an electric heater 1 comprises step: a) bending a metal strip having at least one surface having a surface roughness, Ra, which is greater than 0.8 µm, preferably greater than, or equal to 1 µm, preferably greater than 1 µm - said surface roughness Ra of the metal strip being the same surface roughness Ra as the inner surface 6 of the tube 5 - and executing a welding of said metal strip so as to form the tube 5 having a welding seam 7.

In particular, the metal strip is bended so that said surface of the metal strip, having said surface roughness Ra, becomes the inner surface 6 of the tube 5.

As said previously, the surface roughness Ra of the surface of the metal strip corresponds to the surface roughness Ra of the inner surface 6 of the tube 5.

Therefore, the surface roughness Ra of the metal strip is selected as a function of the desired surface roughness Ra of the inner surface 6 of the tube 5.

A metal strip for obtaining a tube 6 can have one or both surfaces thereof, in particular, those with a greater surface extension, having the desired surface roughness for the inner surface 6 of the tube 5.

The forming, in particular, the bending of the metal strip, is carried out, for example, by means of a rolling mill.

The welding is carried out by welding means, for example, comprising, or consisting of one or more welding machines.

In particular, the welding is a longitudinal welding. In particular, the welding seam 7 which is formed is a longitudinal welding seam.

Preferably, after step a), a step b) is provided, wherein, at each end stretch 51, 52 of the tube 5, said welding seam 7 is crushed or subjected to a chip removal process, preferably so that said welding seam 7 does not form a projection inside the tube 5. The welding seam 7 can be crushed, e.g. by means of a punch. In particular, the punch is inserted into an end stretch 51 of the tube 5. Then, for example, an outer mold crushes the end stretch 51. Likewise for the end stretch 52.

Then, the tube 5 is inserted into the metal body 2, in particular, into a hole of the metal body 2, and fixed to the metal body 2, preferably by means of brazing, preferably after step b).

The one or more electric heating elements 3, 4 are also inserted into the metal body 2, in particular, into a respective hole of the metal body 2, and they are fixed thereto, preferably by means of brazing.

In order to obtain the optional shape shown in Fig. 1, an assembly portion comprising the metal body 2, the tube 5 and the one or more electric heating elements 3, 4 is bended.

Preferably, a cutting step is also provided for cutting the tube 5 to length, by cutting means. The cutting-to-length step is preferably carried out between step a) and step b). Preferably, the tube 5, in particular, the tube 5 cut to length, has a length from 10 to 25 cm, said length being measured, in particular, parallel to the axis X.

Preferably, after step b), a rolling and/or calibration of the tube 5 is carried out, in particular, for obtaining the desired outer diameter.

The invention also relates to a machine (not shown), e.g. a household appliance, for preparing hot beverages, in particular, coffee, comprising an electric heater 1.

Preferably, the machine comprises a first conduit and a second conduit, each inserted into a respective end stretch 51, 52 of the tube 5.

At least one first seal ring (not shown) is arranged between the first conduit and the end stretch 51, and at least one second seal ring (not shown) is arranged between the second conduit and the end stretch 52.

The first conduit is, for example, a tube preferably made of metal, for example, of steel.

The second conduit is, for example, a tube preferably made of metal, for example, steel.

Preferably, each seal ring is elastomeric. Preferably, each seal ring is an o-ring.

Advantageously, the surface roughness Ra of the inner surface 6 of the tube 5 which has been selected (greater than 0.8 µm) drastically reduces or eliminates the occurrence of calefaction, particularly, when Ra > 1 µm.

Furthermore, it is particularly advantageous to make the tube from a metal strip having at least one surface having the desired surface roughness.

The crushing or processing by chip removal of the possible projection inside the tube 5 formed by the welding seam 7 at the end stretches 51, 52 allows suitable contact between the seal rings and the tube 5, so as to avoid undesired leaks of liquid.

## Claims

1. An electric heater (1) for a machine for preparing hot beverages, comprising
- a metal body (2);
- at least one electric heating element (3, 4), in particular adapted to generate heat when it is crossed by an electric current, arranged in the metal body (2);
- a tube (5) for the passage of a liquid to be heated, arranged in the metal body (2); **characterized in that** an inner surface (6) of said tube (5) has surface roughness (Ra), or *arithmetical mean roughness,* greater than 0.8 µm.

2. An electric heater (1) according to claim 1, wherein said surface roughness (Ra) is greater than, or equal to 1 µm, preferably greater than 1 µm.

3. An electric heater (1) according to claim 1 or 2, wherein said tube (5) is made by means of welding a metal strip.

4. An electric heater (1) according to any one of the preceding claims, wherein said tube (5) has a welding seam (7), in particular wherein said welding seam (7) extends substantially parallel to an axis (X) about which the wall of the tube (5) extends.

5. An electric heater (1) according to claim 4, wherein said welding seam (7) comprises two portions (71), each of which has a height towards the inside of the tube (5), which is lower than the height, towards the inside of the tube (5), of the remaining part of the welding seam (7); each of said two portions (71) being at a respective end stretch (51, 52) of the tube (5).

6. An electric heater (1) according to claim 4 or 5, wherein, at each end stretch (51, 52) of the tube (5), said welding seam (7) has been subjected to a crushing or a chip removal process.

7. An electric heater (1) according to any one of claims from 4 to 6, wherein at each end stretch (51, 52) of the tube (5), said welding seam (7) does not form a projection inside the tube (5).

8. An electric heater (1) according to any one of the preceding claims, wherein each end stretch (51, 52) of the tube (5) has a length from 3 to 40 mm, preferably from 15 to 25 mm.

9. An electric heater (1) according to any one of the preceding claims, comprising a first conduit and a second conduit, each inserted into a respective end stretch (51, 52) of the tube (5); and wherein at least one first seal ring is arranged between the first conduit and an end stretch (51), and at least one second seal ring is arranged between the second conduit and the other end stretch (51).

10. A process for obtaining an electric heater (1) according to any one of the preceding claims, wherein there is provided a step of:
a) bending a metal strip having at least one surface having a surface roughness (Ra) which is greater than 0.8 µm, preferably greater than, or equal to 1 µm, and executing a welding of said metal strip, so as to form a tube (5) having a welding seam (7).

11. A process according to claim 10, wherein, after step a) there is provided a step b) wherein, at each end stretch (51, 52) of the tube (5), said welding seam (7) is crushed or subjected to a chip removal process, preferably so that said welding seam (7) does not form a projection inside the tube (5).

12. A machine for preparing hot beverages, in particular coffee, comprising an electric heater (1) according to any one of claims from 1 to 9.

13. A machine according to claim 12, comprising a first conduit and a second conduit, each inserted into a respective end stretch (51, 52) of the tube (5); and wherein at least one first seal ring is arranged between the first conduit and an end stretch (51), and at least one second seal ring is arranged between the second conduit and the other end stretch (52).

## Patentansprüche

1. Elektrischer Heizkörper (1) für eine Maschine zur Zubereitung von heißen Getränken, umfassend
- einen Metallkörper (2);
- mindestens ein elektrisches Heizelement (3, 4), das insbesondere dazu geeignet ist, Wärme zu erzeugen, wenn es von einem elektrischen Strom durchflossen wird, und das in dem Metallkörper (2) angeordnet ist;
- ein Rohr (5) für den Durchgang einer zu erhitzenden Flüssigkeit, das in dem Metallkörper (2) angeordnet ist;
**dadurch gekennzeichnet, dass** eine Innenoberfläche (6) des Rohrs (5) eine Oberflächenrauheit (Ra) oder *arithmetische mittlere Rauheit* von mehr als 0,8 µm aufweist.

2. Elektrischer Heizkörper (1) nach Anspruch 1, wobei die Oberflächenrauheit (Ra) größer als oder gleich 1 µm, vorzugsweise größer als 1 µm, ist.

3. Elektrischer Heizkörper (1) nach Anspruch 1 oder 2, wobei das Rohr (5) durch Schweißen eines Metallstreifens hergestellt ist.

4. Elektrischer Heizkörper (1) nach einem der vorhergehenden Ansprüche, wobei das Rohr (5) eine Schweißnaht (7) aufweist, wobei sich die Schweißnaht (7) insbesondere im Wesentlichen parallel zu einer Achse (X) erstreckt, um die sich die Wand des Rohrs (5) erstreckt.

5. Elektrischer Heizkörper (1) nach Anspruch 4, wobei die Schweißnaht (7) zwei Abschnitte (71) umfasst, von denen jeder eine Höhe in Richtung der Innenseite des Rohrs (5) aufweist, die niedriger ist als die Höhe des verbleibenden Teils der Schweißnaht (7) in Richtung der Innenseite des Rohrs (5); wobei sich jeder der beiden Abschnitte (71) an einem jeweiligen Endstück (51, 52) des Rohrs (5) befindet.

6. Elektrischer Heizkörper (1) nach Anspruch 4 oder 5, wobei die Schweißnaht (7) an jedem Endstück (51, 52) des Rohrs (5) einem Quetschen oder einem Spanabnahmevorgang unterzogen wird.

7. Elektrischer Heizkörper (1) nach einem der Ansprüche 4 bis 6, wobei die Schweißnaht (7) an jedem Endstück (51, 52) des Rohrs (5) keinen Vorsprung im Inneren des Rohrs (5) bildet.

8. Elektrischer Erhitzer (1) nach einem der vorhergehenden Ansprüche, wobei jedes Endstück (51, 52) des Rohrs (5) eine Länge von 3 bis 40 mm, vorzugweise von 15 bis 25 mm, aufweist.

9. Elektrischer Heizkörper (1) nach einem der vorhergehenden Ansprüche, der eine erste Leitung und eine zweite Leitung umfasst, die jeweils in ein entsprechendes Endstück (51, 52) des Rohrs (5) eingesetzt sind; und wobei mindestens ein erster Dichtungsring zwischen der ersten Leitung und einem Endstück (51) angeordnet ist und mindestens ein zweiter Dichtungsring zwischen der zweiten Leitung und dem anderen Endstück (51) angeordnet ist.

10. Verfahren zum Herstellen eines elektrischen Heizkörper (1) nach einem der vorhergehenden Ansprüche, wobei folgender Schritt vorgesehen ist:
a) Biegen eines Metallstreifens, der mindestens eine Oberfläche mit einer Oberflächenrauheit (Ra) aufweist, die größer als 0,8 µm, vorzugsweise größer als oder gleich 1 µm, ist, und Ausführen eines Schweißens des Metallstreifens, um ein Rohr (5) mit einer Schweißnaht (7) zu bilden.

11. Verfahren nach Anspruch 10, wobei nach Schritt a) ein Schritt b) vorgesehen ist, wobei die Schweißnaht (7) an jedem Endstück (51, 52) des Rohrs (5) gequetscht wird oder einem Spanabnahmevorgang unterzogen wird, vorzugsweise derart, dass die Schweißnaht (7) keinen Vorsprung im Inneren des Rohrs (5) bildet.

12. Maschine zur Zubereitung von heißen Getränken, insbesondere Kaffee, die einen elektrischen Heizkörper (1) nach einem der Ansprüche 1 bis 9 umfasst.

13. Maschine nach Anspruch 12, die eine erste Leitung und eine zweite Leitung umfasst, die jeweils in ein entsprechendes Endstück (51, 52) des Rohrs (5) eingesetzt sind; und wobei mindestens ein erster Dichtungsring zwischen der ersten Leitung und einem Endstück (51) angeordnet ist und mindestens ein zweiter Dichtungsring zwischen der zweiten Leitung und dem anderen Endstück (52) angeordnet ist.

## Revendications

1. Chauffage électrique (1) pour une machine à préparer des boissons chaudes, comprenant
- un corps métallique (2) ;
- au moins un élément chauffant électrique (3, 4), notamment adapté pour générer de la chaleur lorsqu'il est traversé par un courant électrique, disposé dans le corps métallique (2) ;
- un tube (5) pour le passage d'un liquide à chauffer, disposé dans le corps métallique (2) ;
**caractérisé en ce qu'**une surface interne (6) dudit tube (5) présente une rugosité de surface (Ra), ou *rugosité moyenne arithmétique,* supérieure à 0,8 µm.

2. Chauffage électrique (1) selon la revendication 1, dans lequel ladite rugosité de surface (Ra) est supérieure ou égale à 1 µm, de préférence supérieure à 1 µm.

3. Chauffage électrique (1) selon la revendication 1 ou 2, dans lequel ledit tube (5) est fabriqué au moyen du soudage d'une bande métallique.

4. Chauffage électrique (1) selon l'une quelconque des revendications précédentes, dans lequel ledit tube (5) a une ligne de soudure (7), en particulier dans lequel ladite ligne de soudure (7) s'étend sensiblement parallèle à un axe (X) autour duquel la paroi du tube (5) s'étend.

5. Chauffage électrique (1) selon la revendication 4, dans lequel ladite ligne de soudure (7) comprend deux portions (71), dont chacune a une hauteur, vers l'intérieur du tube (5), qui est inférieure à la hauteur, vers l'intérieur du tube (5), de la partie restante de la ligne de soudure (7) ; chacune desdites deux portions (71) étant à une étendue d'extrémité respective (51, 52) du tube (5).

6. Chauffage électrique (1) selon la revendication 4 ou 5, dans lequel, à chaque étendue d'extrémité (51, 52) du tube (5), ladite ligne de soudure (7) a été soumise à un processus d'écrasement ou d'enlèvement de copeaux.

7. Chauffage électrique (1) selon l'une quelconque des revendications 4 à 6, dans lequel à chaque étendue d'extrémité (51, 52) du tube (5), ladite ligne de soudure (7) ne forme pas de saillie à l'intérieur du tube (5).

8. Chauffage électrique (1) selon l'une quelconque des revendications précédentes, dans lequel chaque étendue d'extrémité (51, 52) du tube (5) a une longueur de 3 à 40 mm, de préférence de 15 à 25 mm.

9. Chauffage électrique (1) selon l'une quelconque des revendications précédentes, comprenant un premier conduit et un deuxième conduit, chacun inséré dans une étendue d'extrémité respective (51, 52) du tube (5) ; et dans lequel au moins une première bague d'étanchéité est disposée entre le premier conduit et une étendue d'extrémité (51), et au moins une deuxième bague d'étanchéité est disposée entre le deuxième conduit et l'autre étendue d'extrémité (51).

10. Procédé pour obtenir un chauffage électrique (1) selon l'une quelconque des revendications précédentes, dans lequel il est prévu une étape consistant à :
a) plier une bande métallique ayant au moins une surface ayant une rugosité de surface (Ra) qui est supérieure à 0,8 µm, de préférence supérieure ou égale à 1 µm, et exécuter un soudage de ladite bande métallique, de manière à former un tube (5) ayant une ligne de soudure (7).

11. Procédé selon la revendication 10, dans lequel, après l'étape a), il est prévu une étape b) dans laquelle, à chaque étendue d'extrémité (51, 52) du tube (5), ladite ligne de soudure (7) est écrasée ou soumise à un processus d'enlèvement de copeaux, de préférence de sorte que ladite ligne de soudure (7) ne forme pas de saillie à l'intérieur du tube (5).

12. Machine pour préparer des boissons chaudes, en particulier du café, comprenant un chauffage électrique (1) selon l'une quelconque des revendications 1 à 9.

13. Machine selon la revendication 12, comprenant un premier conduit et un deuxième conduit, chacun inséré dans une étendue d'extrémité respective (51, 52) du tube (5) ; et dans laquelle au moins une première bague d'étanchéité est disposée entre le premier conduit et une étendue d'extrémité (51), et au moins une deuxième bague d'étanchéité est disposée entre le deuxième conduit et l'autre étendue d'extrémité (52).
